(19) Europäisches Patentamt

European Patent Office

Office européen des brevets

(11) **EP 0 902 899 B1**

(12) **FASCICULE DE BREVET EUROPEEN**

(45) Date de publication et mention
de la délivrance du brevet:
**16.01.2002 Bulletin 2002/03**

(51) Int Cl.[7]: **G01S 5/14**

(86) Numéro de dépôt international:
**PCT/FR97/00965**

(21) Numéro de dépôt: **97926081.7**

(22) Date de dépôt: **03.06.1997**

(87) Numéro de publication internationale:
**WO 97/47986 (18.12.1997 Gazette 1997/54)**

(54) **RECEPTEUR DE SIGNAUX DE SATELLITES AVEC FILTRE D'EXTRAPOLATION DE POSITION**

SATELLITENEMPFÄNGER MIT FILTER ZUR EXTRAPOLIERUNG DER POSITION

SATELLITE SIGNAL RECEIVER WITH POSITION EXTRAPOLATION FILTER

(84) Etats contractants désignés:
**DE FR IT**

(30) Priorité: **07.06.1996 FR 9607071**

(43) Date de publication de la demande:
**24.03.1999 Bulletin 1999/12**

(73) Titulaire: **THALES AVIONICS S.A.**
**78141 Vélizy Villacoublay Cédex (FR)**

(72) Inventeur: **ARETHENS, Jean-Pierre,**
**Thomson-CSF S.C.P.I.**
**F-94117 Arcueil Cedex (FR)**

(74) Mandataire: **Guérin, Michel et al**
**Thomson-CSF Propriété Intellectuelle, 13,**
**Avenue du Président Salvador Allende**
**94117 Arcueil Cédex (FR)**

(56) Documents cités:
WO-A-95/00861          US-A- 5 132 695
US-A- 5 452 211         US-A- 5 459 473

## Description

L'invention concerne les récepteurs de positionnement par satellite tels que les récepteurs GPS (Global Positionning System).

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence contenant des données de navigation et des codes qui permettent d'identifier chaque satellite. Ces codes modulent en phase une fréquence porteuse. Un récepteur GPS, au sol ou sur un véhicule terrestre, aérien ou maritime, peut recevoir les signaux de plusieurs satellites simultanément, calculer précisément sa distance à chacun des satellites, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures doppler, son propre vecteur vitesse dans le repère terrestre (cas d'un récepteur monté sur un véhicule mobile). Un tel système est divulgué dans le document WO95/00861.

Dans le système GPS, chaque satellite est identifié par un code pseudo-aléatoire qui lui est propre et qui module de manière répétitive (toutes les millisecondes par exemple) une fréquence porteuse émise par le satellite. Il existe des systèmes voisins du GPS, notamment le système GLONASS, dans lequel ce code pseudo-aléatoire existe également bien qu'il ne serve pas à identifier un satellite individuel. L'invention qui va être décrite est applicable directement au système GLONASS mais pour plus de simplicité on ne se référera dans la suite qu'au système GPS, et plus précisément à la partie "civile" du système GPS, lequel comporte aussi une partie militaire à laquelle l'invention est également applicable.

Le code pseudo-aléatoire est un code long (1023 bits à 1,023 MHz, soit 1 milliseconde), et une de ses fonctions principales est de permettre l'extraction du signal du satellite dans un niveau de bruit beaucoup plus élevé (30 dB par exemple) que le niveau du signal, Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la vitesse de parcours des signaux est la vitesse de la lumière, on peut calculer la distance entre le récepteur et un satellite donné. La même opération faite sur deux autres satellites permet, par triangulation, de déterminer la position exacte du récepteur par rapport aux trois satellites.

En utilisant un quatrième satellite, on élimine les erreurs d'horloge du récepteur, l'horloge du récepteur n'étant pas aussi précise que celle des satellites. Outre la position du récepteur on peut alors calculer un temps précis de la mesure de position, dans le repère de temps des satellites GPS.

La position de chacun des satellites est connue à tout instant : elle est calculée à partir de tables stockées dans le récepteur et remises à jour par le message de navigation diffusé par les satellites. La vitesse des satellites à tout instant est également calculable à partir de ces tables.

On peut déduire, à partir des signaux envoyés par quatre satellites, le temps et la position du récepteur par rapport aux quatre satellites. Et, par changement de coordonnées, on obtient la position du récepteur dans un repère terrestre fixe.

De même, la vitesse du récepteur est calculée à partir d'une mesure d'effet Doppler sur la fréquence porteuse du signal radiofréquence envoyé par les satellites. On peut donc calculer la vitesse relative du récepteur par rapport à chacun des satellites, selon l'axe directeur qui relie ce satellite au récepteur. Quatre satellites sont nécessaires pour éliminer l'ambiguïté sur le temps. On obtient quatre vecteurs de vitesse relative différents, sur les axes directeurs reliant le récepteur aux quatre satellites. Des calculs simples permettent de déterminer la vitesse du récepteur selon trois axes dans le repère terrestre à partir de ces quatre vecteurs vitesse et des informations suivantes:

- les directions des axes directeurs récepteur-satellite par rapport à un repère terrestre fixe (longitude, latitude, altitude); ces directions sont obtenues elles-mêmes par la connaissance de la position du récepteur à un instant donné et la position de chaque satellite à ce même instant;

- les vitesses individuelles des satellites dans le repère terrestre à cet instant.

Compte tenu du compromis nécessaire entre la tenue en dynamique et la tenue au bruit des boucles d'asservissement de code, il est difficile d'obtenir plus d'une mesure de position par seconde (mesure déduite des mesures sur le code). Dans certaines applications de récepteurs GPS, cette cadence peut être insuffisante. Ce serait le cas par exemple si un récepteur GPS devait être utilisé par un avion en mode de pilotage automatique dans une phase d'approche à l'atterrissage; c'est pourquoi il n'est pas envisagé actuellement de se servir de récepteurs GPS dans ce cas. Cependant, c'est regrettable car un récepteur GPS aurait par ailleurs toutes les qualités requises pour servir dans ce type d'application.

Pour permettre d'utiliser un récepteur GPS sur un mobile dans des applications où la cadence de fourniture de position doit être supérieure à celle que fournit normalement le récepteur, on propose selon l'invention de combiner une mesure de position basée sur une mesure de pseudo-distances à un instant donné et une mesure de vitesse fournie par le récepteur à partir de mesures doppler dans les circuits de mesure de pseudo-distance (par opposition à des mesures de vitesse qui seraient obtenues par dérivation de mesures de position, ou à des mesures de vitesse obtenues par des instruments autres que le récepteur GPS), pour extrapoler la position du récepteur à des instants intermédiaires entre deux mesures de position et fournir des positions intermédiaires corrigées entre deux mesures faites à partir des pseudo-distances.

Et comme le plus souvent le récepteur est capable de fournir une mesure de vitesse à une cadence supérieure à la cadence de fourniture de position, l'extrapolation peut être encore affinée en utilisant à chaque instant intermédiaire une nouvelle mesure de vitesse. Par exemple, un récepteur GPS qui fournit une position par seconde peut fournir une vitesse toutes les 0,2 seconde.

Cette solution est particulièrement avantageuse pour obtenir des positions très précises dans une application de récepteur GPS différentiel, c'est-à-dire dans une application où le récepteur reçoit non seulement les signaux de plusieurs satellites, mais également les signaux d'une balise terrestre fixe, de position connue, à proximité du lieu où se trouve le récepteur.

En choisissant convenablement les règles de calcul de position extrapolée, on peut également éviter l'influence des sauts brusques de position lors des changements de constellation de satellites : les erreurs de mesure affectant les différents satellites ne sont pas identiques d'un groupe de satellites à un autre, et une mesure faite avec un premier groupe de satellites ne donne pas exactement la même position qu'une mesure faite au même lieu avec un autre groupe. Comme le récepteur et les satellites se déplacent, le récepteur voit successivement différentes constellations et lorsqu'un satellite sort du champ d'observation du récepteur et est remplacé par un autre, la nouvelle position peut sauter brusquement d'une petite valeur. Le cas se présente fréquemment dans un avion car le roulis de l'avion lors des changements de cap modifie les constellations vues par le récepteur GPS. Les calculs de position corrigée à partir de positions précédemment calculées permettent de lisser la transition entre deux mesures différentes, que ce soit en utilisant les informations de vitesse ou non, l'utilisation de la vitesse étant bien entendu préférable.

Cet avantage de lissage de position en présence de changements de constellation est obtenu en particulier grâce à des moyens de calcul qui fournissent une position corrigée à un instant donné, cette position corrigée tenant compte de la position mesurée à cet instant et d'une position corrigée calculée à un instant précédent. On calcule de préférence la différence entre ces deux positions, on la multiplie par un coefficient inférieur à 1 et on l'ajoute à la position précédemment corrigée. Si on fait intervenir la vitesse, la procédure est de préférence la suivante : pour obtenir une position corrigée à un instant qui suit une fourniture de mesure de position par le récepteur (et qui précède une nouvelle mesure), on ajoute à la position corrigée calculée à l'instant précédent les deux termes suivants:

- produit de la vitesse courante (en pratique la vitesse à l'instant actuel ou à l'instant précédent) par l'intervalle de temps dT séparant les deux instants successifs de calcul de position corrigée, et
- produit de la différence entre la position mesurée et la position corrigée calculée à l'instant précédent, par un coefficient inférieur à 1.

Ceci revient à dire qu'on intègre la vitesse entre deux mesures pour corriger la position, et on rajoute un terme de lissage.

D'autres caractéristiques et avantages de l'invention apparaîtront à la lecture de la description détaillée qui suit et qui est faite en référence aux dessins annexés dans lesquels :

- la figure 1 représente la constitution générale d'un récepteur GPS dans lequel la présente invention peut être mis en oeuvre;
- la figure 2 représente un dispositif de mise en oeuvre de l'invention.

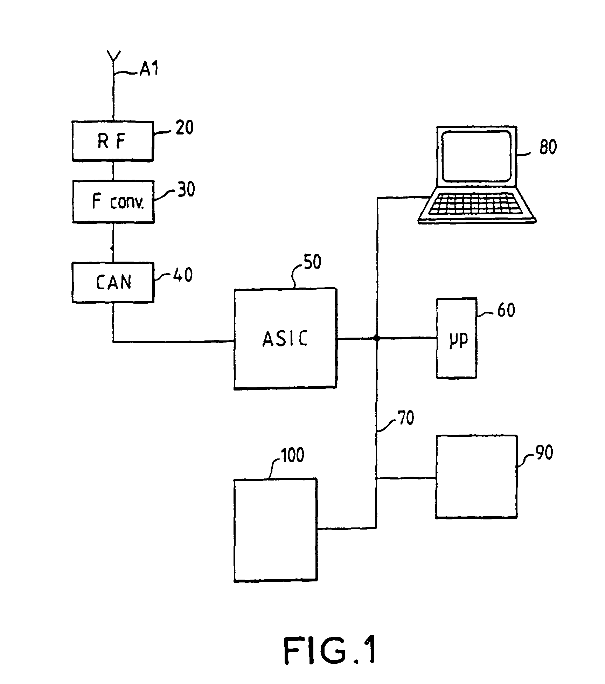

La figure 1 rappelle sommairement le principe général d'un récepteur GPS. Le récepteur comporte une partie radiofréquence, comprenant une antenne A1, un amplificateur radiofréquence 20 et divers circuits de filtrage associés, des circuits de conversion de fréquence 30, et un convertisseur analogique-numérique 40. Le convertisseur permet de fournir des signaux numériques à relativement basse fréquence destinés à être traités dans un circuit de traitement de signal numérique 50. Ce circuit est contrôlé par un microprocesseur 60 et des logiciels de calcul et de contrôle associés.

Le microprocesseur 60 a deux fonctions :

- d'une part, il élabore des données numériques utilisées par le circuit de traitement de signal numérique 50, à partir de données numériques fournies par ce circuit; en particulier, il effectue des calculs numériques nécessaires aux boucles d'asservissement numérique présentes dans le circuit de traitement numérique 50;
- et d'autre part il fournit des résultats définitifs de calcul de position, de temps, et de vitesse à l'utilisateur, c'est-à-dire soit sur un écran d'affichage numérique soit sur un bus numérique vers d'autres appareils qui ont besoin des résultats.

On pourrait évidemment avoir deux processeurs séparés pour effectuer ces deux fonctions. Dans la réalisation avec un seul microprocesseur 60, on a représenté un bus d'échanges 70 entre le microprocesseur 60, le circuit de traitement 50, un périphérique d'entrée/sortie 80, les mémoires de travail 90, et les mémoires de programmes 100 qui contiennent les programmes nécessaires au fonctionnement du microprocesseur.

Très sommairement, le circuit de traitement de signal numérique comporte soit un seul canal de traitement, les informations issues des divers satellites étant traitées de manière multiplexée, soit de préférence plusieurs canaux travaillant en parallèle chacun sur un satellite déterminé.

Chaque canal comporte une double boucle d'asservissement : asservissement de phase de porteuse et asservissement de phase de code.

La boucle de phase de porteuse utilise essentiellement un oscillateur local à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement. Le microprocesseur 60 calcule un signal d'erreur de phase de porteuse; ce signal sert à commander l'oscillateur local pour asservir une fréquence porteuse locale sur la fréquence porteuse reçue du satellite.

La boucle d'asservissement de phase de code comporte un générateur de code local, piloté par un oscillateur à contrôle numérique de phase. Elle permet d'asservir les codes locaux sur le code reçu du satellite et de pouvoir ensuite déterminer la position temporelle exacte des codes locaux ainsi asservis. Le code local est corrélé avec le code reçu du satellite; le signal de corrélation est calculé par le microprocesseur et sert à asservir la boucle pour amener le code local en synchronisme avec le code reçu du satellite.

Les deux boucles d'asservissement, de code et de porteuse prennent en compte le décalage de fréquence doppler sur la fréquence porteuse et sur le code, résultant du déplacement relatif de l'avion et du satellite détecté. Ce décalage doppler est mesurable dans les boucles.

Les calculs de temps et de position GPS sont effectués à partir de l'état des boucles d'asservissement à un instant de mesure déterminé. A cet instant, on lit l'état exact de la phase des deux oscillateurs à contrôle numérique de phase.

Les boucles d'asservissement prévues dans le récepteur agissent pour caler une fréquence locale sur la fréquence porteuse reçue des satellites. Le décalage entre cette fréquence locale et la fréquence stable et connue émise par les satellites donne une indication de décalage doppler donc de différence entre la vitesse du satellite et la vitesse du récepteur selon l'axe reliant le satellite au récepteur.

Par conséquent, à partir de mesures effectuées sur le code pseudo-aléatoire, on calcule une position dite "position résolue", dans le repère terrestre; et, à partir de mesures effectuées sur les fréquence de porteuse, donc par mesures d'effet Doppler, on calcule une vitesse du récepteur dans le repère terrestre.

Selon un premier aspect de l'invention, on utilise la mesure de vitesse pour fournir une position extrapolée pendant l'intervalle de temps qui sépare la fourniture d'une première position de la fourniture d'une nouvelle position. La mesure de vitesse est celle qui résulte de mesures doppler dans les circuits de mesure de pseudo-distances qui permettent de calculer la position du récepteur à partir des positions des satellites.

Soit $P_i$ la position résolue à un instant $T_i$, et $V_i$ la vitesse résolue à cet instant $T_i$. $P_i$ et $V_i$ sont des vecteurs dans le repère terrestre. Soit kdT l'intervalle de temps après lequel on obtient une nouvelle mesure de position : une nouvelle position est calculée par le récepteur à un instant $T_{i+1} = T_i + kdT$. Soit j un indice (j= 1 à k) représentant des instants intermédiaires $T_{i,j}$ auxquels on désire obtenir des positions $P_{i,j}$ extrapolées à partir de la position $P_i$ jusqu'à la fourniture de la position $P_{i+1}$. Ces instants sont séparés par la durée dT. Pour j = k, le temps $T_{i,k}$ correspond au temps $T_{i+1}$, c'est-à-dire à la mesure de l'échantillon de position suivant.

On élabore une position intermédiaire à un instant donné en ajoutant à la position déterminée à l'instant précédent le produit de la vitesse par l'intervalle de temps séparant les deux instants considérés:

$$P_{i,1} = P_i + V_i.dT, \text{ puis } P_{i,2} = P_{i,1} + V_i.dT, P_{i,j+1} = P_{i,j} + V_i.dT,$$

etc..., et enfin $P_{i,k-1} = P_{i,k-2} + V_i.dT$

Si la vitesse $V_i$ est fournie à une cadence plus rapide que la position, on utilise de préférence à chaque incrémentation la dernière valeur de vitesse connue. En particulier, si dT représente l'intervalle de temps séparant deux calculs de vitesse par le récepteur et si alors $V_{i,j}$ représente la vitesse à l'instant $T_i+j.dT$, alors, la position corrigée à l'instant $T_i + (j+1).dT$ s'écrit :

$$P_{i,j+1} = P_{i,j} + V_{i,j}.dT$$

Indépendamment d'une extrapolation par la vitesse, on peut aussi prévoir de calculer une position corrigée lissée à partir des positions précédemment calculées. Ceci permet notamment d'éviter les sauts de position lors des changements de constellation. Dans ce cas, la position filtrée à un instant $T_{i,j+1}$ peut être calculée à partir de la position filtrée à l'instant $P_{i,j}$ et de la position calculée à l'instant $T_i$, par la formule :

$$P_{i,j+1} = P_{i,j} + \alpha.(P_i - P_{i-1,k})$$

où $\alpha$ est un coefficient de lissage inférieur à 1/k, k étant le nombre d'échantillons intermédiaires entre deux mesures de position $P_i$ et $P_{i+1}$.

$P_{i-1,k}$ est la position filtrée au moment de la mesure de position $P_i$ (instant $T_i$). Elle correspond donc au calcul de position filtrée à l'instant $T_i$ où un nouvel échantillon de position $P_i$ est fourni, ce calcul résultant des mesures de position et de vitesse précédentes.

Ceci signifie qu'on corrige par itération convergente la position calculée par une fraction de la différence entre la position résolue et une position précédemment corrigée.

Si on combine l'extrapolation de vitesse et le filtrage de lissage, on peut calculer la position corrigée $P_{i,j+1}$ à l'instant intermédiaire $T_{i,j+1}$ par la formule :

$$P_{i,j+1} = P_{i,j} + V_{i,j}.dT + \alpha.(P_i-P_{i-1,k})$$

On fournit donc à chaque instant d'extrapolation une position corrigée $P_{i,j+1}$ qui tient compte de la position filtrée $P_{i-1,k}$ calculée à l'instant de mesure de position précédent, de la vitesse $V_{i,j}$ connue à l'instant d'extrapolation précédent (ou de la dernière vitesse connue), et enfin de la dernière position $P_i$ fournie par les mesures du récepteur.

Plus précisément, la position corrigée à l'instant j+1 est déduite de la position corrigée à l'instant précédent j par un premier terme qui est l'intégrale de la vitesse pendant l'intervalle qui sépare ces deux instants, et par un second terme qui est une fraction de la différence entre la position mesurée à l'instant $T_i$ et la position corrigée à l'instant $T_i$-1.

Dès lors qu'on dispose de la position Pi et la vitesse $V_{i,j}$ on peut mettre en oeuvre l'invention pour calculer à chaque instant une position corrigée.

Un mode de mise en oeuvre consiste à intégrer la vitesse Vi,j à chaque instant pour élaborer un terme d'extrapolation représentant Vi,j.dT. Le terme de lissage $\alpha.(P_i-P_{i-1,k})$ peut être obtenu en élaborant la différence $(P_i-P_{i-1,k})$ et en le multipliant par un coefficient d'atténuation $\alpha$.

Mais on peut aussi, dans une réalisation avec calcul numérique, intégrer un terme $\beta(P_i-P_{i-1,k}).dT$, c'est-à-dire calculer $\beta(P_i-P_{i-1,k}).dT$, dans lequel $\beta$ serait un coefficient de lissage, homogène à une fréquence et tel que $\beta.dT<1$.

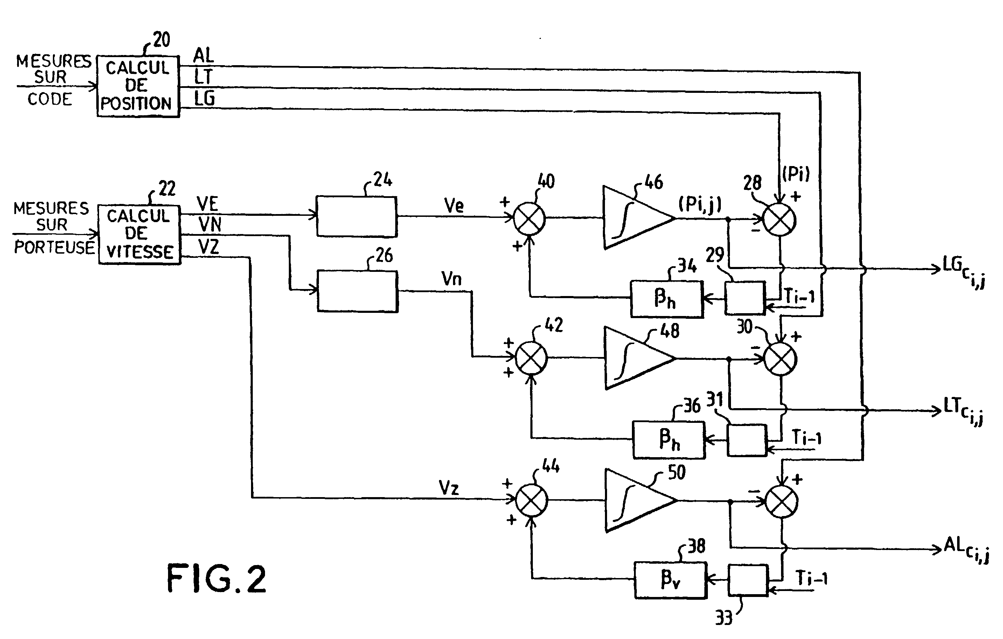

Le dispositif représenté à la figure 2 permet de mettre en oeuvre l'invention dans cette dernière forme. Il peut être réalisé sous forme matérielle ou sous forme logicielle. Le microprocesseur 60 de la figure 1 permet d'effectuer les calculs. Le bloc 20 représente une fonction de calcul de position à partir des mesures physiques fournies par le récepteur sur les positions de code aléatoire dans les signaux satellites. Le bloc 22 représente une fonction de calcul de vitesse à partir des mesures de fréquence de porteuse des signaux de satellites. La position calculée par le bloc 20 s'exprime en principe en longitude LG, latitude LT et altitude AL. La vitesse calculée par le bloc 22 s'exprime en vitesse est-ouest VE, en vitesse nord-sud VN, et en vitesse verticale VZ.

Si les vitesses VN et VE ne sont pas exprimées à l'aide des mêmes unités de distance que les latitudes et longitudes, des conversions d'unité sont faites par les blocs 24 et 26 (exemple : longitudes et latitudes exprimées en degrés/minutes et vitesses en mètres/seconde).

La position corrigée est fournie en longitude, latitude, altitude, sur des sorties LGc, LTc, ALc. Des soustracteurs 28, 30, 32 établissent la différence entre la position mesurée LG, LT, AL et la position corrigée LGc, LTc, ALc au moment de la mesure (temps $T_i$). Ces différences sont mises en mémoire dans les blocs 29, 31, 33 qui conservent ces différences jusqu'à l'instant de mesure de position suivant $T_{i+1}$. Des multiplicateurs 34, 36, 38 multiplient ces différences par un même coefficient de lissage β ou par des coefficients différents, par exemple un coefficient $β_h$ pour les positions mesurées horizontalement (longitude et latitude) et $β_v$ pour les positions mesurées verticalement. Des additionneurs 40, 42, 44 ajoutent les sorties des multiplicateurs respectivement aux vitesses Ve, Vn, et VZ. Enfin, des intégrateurs 46, 48, 50, intègrent les sorties des additionneurs 40, 42, 44, les sorties de ces intégrateurs fournissant les positions corrigées LGc, LTc, ALc. Dans un traitement purement numérique, les intégrateurs se contentent de multiplier les sorties des additionneurs 40, 42, 44 par l'intervalle de temps dT entre deux calculs successifs de position corrigée.

Ce dispositif permet donc de fournir les positions corrigées selon les principes exposés ci-dessus. La fréquence de récurrence peut être de 5 Hertz, alors que les mesures de positions non corrigées sont fournies à environ 1 Hertz.

Les formules mathématiques détaillées sont les suivantes, dans lesquelles on a détaillé les composants des vecteurs de position et de vitesse et le coefficient β de lissage. Ce coefficient peut être différent pour la longitude et la latitude ($β_h$) et pour l'altitude ($β_v$).

$$\begin{bmatrix} LTc \\ LGc \\ ALc \end{bmatrix}_{i,j+1} = \begin{bmatrix} LTc \\ LGc \\ ALc \end{bmatrix}_{i,j} + \begin{bmatrix} Vn.dT \\ ve.dT \\ VZ.dT \end{bmatrix}_{i,j} + \begin{bmatrix} β_h & 0 & 0 \\ 0 & β_0 & 0 \\ 0 & 0 & β_v \end{bmatrix} \begin{bmatrix} LT_i - LTc_{i-1,k} \\ LG_i - LGc_{i-1,k} \\ ALA_i - alc_{i-1,k} \end{bmatrix}$$

Dans un exemple, $β_v dT = β_h dT = 0{,}2$

## Revendications

1. Récepteur de positionnement par satellites, comprenant des moyens de calcul de position (20) permettant de déterminer la position du récepteur à partir de mesures de pseudo-distances et des moyens de calcul de vitesse du récepteur par mesure d'effet Doppler dans les circuits de mesure de pseudo-distances, **caractérisé en ce qu'**il comporte en outre des moyens pour combiner une mesure de position (LG, LT, LC) basée sur une mesure de pseudo-distance à un instant donné et une mesure de vitesse (VE, VN, VZ) fournie par le récepteur à partir de mesures Doppler dans les circuits de mesure de pseudo-distance, pour extrapoler la position du récepteur à des instants intermédiaires entre deux mesures de position successives et fournir des positions intermédiaires corrigées entre deux mesures de position successives.

2. Récepteur selon la revendication 1, **caractérisé en ce qu'**il comprend des moyens pour fournir à un instant donné une position corrigée qui tient compte de la position mesurée à cet instant et d'une position corrigée calculée précédemment.

3. Récepteur selon la revendication 2, **caractérisé en ce que** les moyens pour fournir une position corrigée comprennent des moyens pour additionner à une position corrigée précédente la différence entre la position mesurée et la position corrigée précédente, cette différence étant multipliée par un coefficient de lissage inférieur à 1.

4. Récepteur selon l'une des revendications 1 à 3, **caractérisé en ce que** la mesure de vitesse utilisée pour calculer une position corrigée à un instant donné est la dernière mesure de vitesse fournie par le récepteur avant l'instant considéré.

5. Récepteur selon la revendication 4, **caractérisé en ce que** les moyens pour calculer la position corrigée à un instant donné comprennent des moyens pour intégrer la vitesse à un instant précédent pendant une durée correspondant à la différence entre ces deux instants.

6. Récepteur selon la revendication 5, **caractérisé en ce que** les moyens pour calculer une position corrigée à un instant donné comprennent des moyens pour ajouter à la position corrigée calculée à l'instant précédent les deux termes suivants:

- produit de la vitesse courante par l'intervalle de temps séparant les deux instants,
- produit de la différence entre la position mesurée et la position corrigée à un instant de mesure de position précédent, par un coefficient inférieur à 1.

**7.** Récepteur selon la revendication 5, **caractérisé en ce qu'**il comprend des moyens pour intégrer la vitesse mesurée, et des moyens pour intégrer la différence entre la position fournie et la position corrigée, cette différence étant affectée d'un coefficient de lissage β homogène à une fréquence et tel que βdT soit inférieur à l'unité, où dT est l'intervalle de temps entre deux calculs de position corrigée successifs.

**Claims**

**1.** Satellite positioning receiver, comprising position calculation means (20) for determining the position of the receiver on the basis of pseudo-distance measurements, and means for calculating the velocity of the receiver by Doppler-effect measurement in the pseudo-distance measurement circuits, **characterized in that** it furthermore has means for combining a position measurement (LG, LT, LC), based on a pseudo-distance measurement at a given time, and a velocity measurement (VE, VN, VZ) provided by the receiver on the basis of Doppler measurements in the pseudo-distance measurement circuits, in order to extrapolate the position of the receiver at times intermediate between two successive position measurements and to provide corrected intermediate positions between two successive position measurements.

**2.** Receiver according to Claim 1, **characterized in that** it comprises means for providing, at a given time, a corrected position which takes into account the position measured at this time and a corrected position calculated previously.

**3.** Receiver according to Claim 2, **characterized in that** the means for providing a corrected position comprise means by adding to a preceding corrected position the difference between the measured position and the preceding corrected position, this difference being multiplied by a smoothing coefficient less than 1.

**4.** Receiver according to one of Claims 1 to 3, **characterized in that** the velocity measurement used to calculate a corrected position at a given time is the last velocity measurement provided by the receiver before the time in question.

**5.** Receiver according to Claim 4, **characterized in that** the means for calculating the corrected position at a given time comprise means for integrating the velocity at a preceding time over a period corresponding to the difference between these two times.

**6.** Receiver according to Claim 5, **characterized in that** the means for calculating a corrected position at a given time comprise means for adding the following two terms to the corrected position calculated at the preceding time:

- product of the current velocity multiplied by the time interval separating the two times,
- product of the difference between the measured position and the corrected position at a preceding position measurement time, multiplied by a coefficient less than 1.

**7.** Receiver according to Claim 5, **characterized in that** it comprises means for integrating the measured velocity, and means for integrating the difference between the supplied position and the corrected position, this difference being assigned a smoothing coefficient β which is homogeneous with a frequency and such that βdT is less than unity, where dT is the time interval between two successive calculations of corrected position.

**Patentansprüche**

**1.** Empfänger für Positionssignale von Satelliten mit Rechenmitteln (20) für die Position, die die Position des Empfängers ausgehend von Messungen von Pseudoentfernungen und den Geschwindigkeits-Rechenmitteln des Empfängers durch Dopplereffektmessung in den Meßschaltungen für Pseudo-Entfernungen bestimmen können, **dadurch gekennzeichnet, daß** er außerdem Mittel besitzt, um eine Messung der Position (LG, LT, LC) auf der Basis der Messung einer Pseudoentfernung in einem gegebenen Zeitpunkt mit einer Geschwindigkeitsmessung (VE, VN, VZ) zu kombinieren, die von dem Empfänger ausgehend von Dopplermessungen in den Meßschaltungen für die PseudoEntfernungen geliefert werden, um die Position des Empfängers in Zeitpunkten zwischen zwei aufeinanderfolgenden Meßzeitpunkten für die Position zu extrapolieren und korrigierte Werte der Zwischenpositionen zwischen zwei aufeinanderfolgenden Positionsmessungen zu liefern.

2. Empfänger nach Anspruch 1, **dadurch gekennzeichnet, daß** er Mittel enthält, um in einem gegebenen Zeitpunkt eine korrigierte Position zu liefern, die die gemessene Position in diesem Zeitpunkt und eine vorher berechnete korrigierte Position berücksichtigt.

3. Empfänger nach Anspruch 2, **dadurch gekennzeichnet, daß** die Mittel zur Lieferung einer korrigierten Position Mittel zur Addition der Differenz zwischen der gemessenen Position und der vorausgegangenen korrigierten Position zu einer vorher korrigierten Position aufweisen, wobei diese Differenz mit einem Glättungskoeffizienten < 1 multipliziert wird.

4. Empfänger nach einem der Ansprüche 1 bis 3, **dadurch gekennzeichnet, daß** die Geschwindigkeitsmessung, die für die Berechnung einer korrigierten Position in einem gegebenen Zeitpunkt verwendet wird, die letzte Geschwindigkeitsmessung ist, die vom Empfänger vor dem betreffenden Zeitpunkt geliefert wurde.

5. Empfänger nach Anspruch 4, **dadurch gekennzeichnet, daß** die Mittel zur Berechnung der korrigierten Position in einem gegebenen Zeitpunkt Mittel enthalten, die die Geschwindigkeit in einem vorausgegangenen Zeitpunkt während einer Dauer entsprechend der Differenz zwischen diesen beiden Zeitpunkten integrieren.

6. Empfänger nach Anspruch 5, **dadurch gekennzeichnet, daß** die Mittel zur Berechnung einer korrigierten Position in einem gegebenen Zeitpunkt Mittel enthalten, um zur in einem vorausgegangenen Zeitpunkt berechneten korrigierten Position die beiden folgenden Größen zu addieren:

- das Produkt aus der aktuellen Geschwindigkeit mit dem Zeitintervall zwischen den beiden Zeitpunkten,
- das Produkt aus der Differenz zwischen der gemessenen Position und der korrigierten Position in einem vorhergehenden Positions-Meßzeitpunkt mit einem Koeffizient < 1.

7. Empfänger nach Anspruch 5, **dadurch gekennzeichnet, daß** er Mittel zur Integration der gemessenen Geschwindigkeit und Mittel zur Integration der Differenz zwischen der gelieferten und der korrigierten Position besitzt, wobei diese Differenz mit einem bei einer Frequenz homogenen Glättungskoeffizienten $\beta$ beaufschlagt wird, derart, daß $\beta \cdot dT$ kleiner als 1 ist, wobei $dT$ das Zeitintervall zwischen zwei aufeinanderfolgenden Berechnungen der korrigierten Position ist.

FIG.1

FIG.2